Europäisches Patentamt

European Patent Office

Office européen des brevets

(11) Veröffentlichungsnummer: **0 450 427 A1**

# (12) EUROPÄISCHE PATENTANMELDUNG

(21) Anmeldenummer: 91104514.4

(51) Int. Cl.5: **F17C 9/00**, F16L 59/06

(22) Anmeldetag: 22.03.91

(30) Priorität: 31.03.90 DE 4010394

(43) Veröffentlichungstag der Anmeldung:
09.10.91 Patentblatt 91/41

(84) Benannte Vertragsstaaten:
DE FR GB IT

(71) Anmelder: FORSCHUNGSZENTRUM JÜLICH GMBH
Wilhelm-Johnen-Strasse
W-5170 Jülich(DE)

Anmelder: CRYO ANLAGENBAU GMBH
Bochumer Strasse 6 a

W-5901 Wilnsdorf(DE)

(72) Erfinder: Jäger, Herbert
Schleckheimer Strasse 187
W-5100 Aachen(DE)
Erfinder: Hebbinghaus, Gerd
Berliner Strasse 71
W-5170 Jülich(DE)
Erfinder: Lieder, Rainer, Prof.
Franziskusstrasse 16
W-5170 Jülich(DE)
Erfinder: Pfau, Ulrich
Albert-Richartz-Strasse 1
W-5900 Siegen(DE)

(54) System zum Abfüllen verflüssigter Gase.

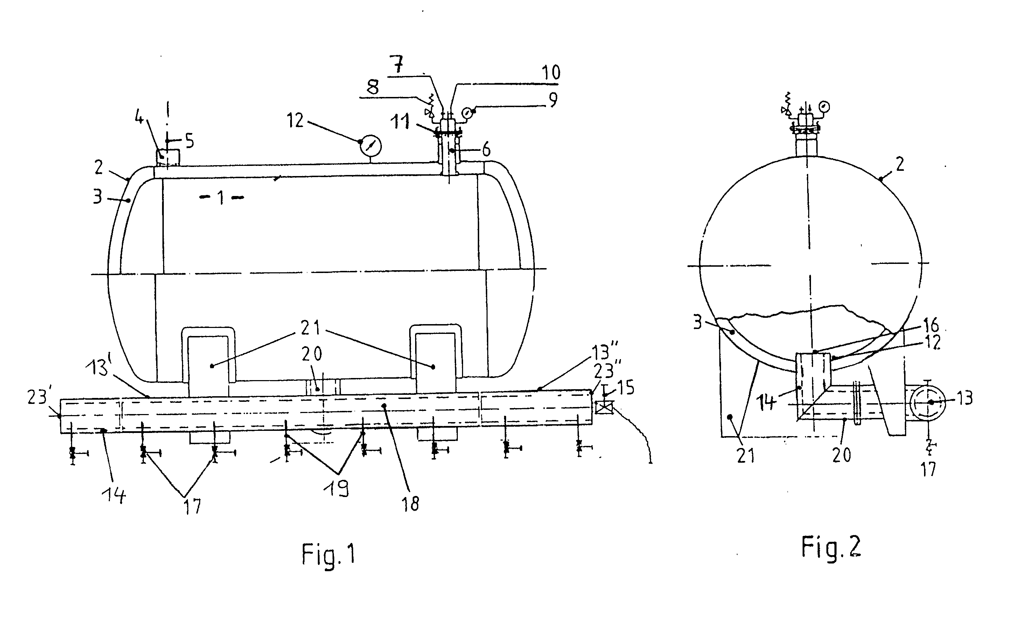

(57) Zum Abfüllen verflüssigter Gase, insbesondere zum Abfüllen flüssigen Stickstoffs aus einem Vorratsbehälter für das Flüssiggas, wird ein System (Figur 1) verwendet, das am Boden (12) des Vorratsbehälters (1) eine Entnahmeleitung (13) mit mehreren am Boden der Entnahmeleitung (13) angeschlossenen, verschließbaren Entnahmehähnen (17) aufweist. Die Entnahmeleitung (13) besteht aus einem Doppelrohr, dessen Wandinnenraum (14) evakuierbar ist, wobei die Entnahmeleitung (13) in den Vorratsbehälter (1) und die Entnahmehähne (17) in die Entnahmeleitung (13) derart münden, daß sie den Boden (12) des Vorratsbehälters (1) bzw. den Boden der Entnahmeleitung (13) überragen.

Fig.1

Fig.2

Die Erfindung bezieht sich auf ein System zum Abfüllen verflüssigter Gase, insbesondere zum Abfüllen flüssigen Stickstoffs aus einem Vorratsbehälter für Flüssiggas.

Bei der Abfüllung verflüssigter Gase ist dafür Sorge zu tragen, daß eine möglichst geringe Temperaturänderung, insbesondere kein Temperatursprung erfolgt, der zu starker Verdunstung und Verdampfung des Flüssiggases führen kann. Dies nicht nur wegen der dabei hinzunehmenden starken Flüssiggasverluste, sondern auch wegen der entstehenden Vereisung der zur Entnahme dienenden Apparaturen. Zu Vermeiden ist beim Abfüllen auch eine Verunreinigung der verflüssigten Gase durch Ablagerungen im Vorratsbehälter.

Aufgabe der Erfindung ist es, ein System zum Abfüllen von verflüssigten Gasen zu schaffen, bei dem Flüssiggas bis zur Zapfstelle temperaturstabil gehalten werden kann und frei von Ablagerungen aus dem Vorratsbehälter entnehmbar ist.

Diese Aufgabe wird bei einem System der eingangs genannten Art durch die in Patentanspruch 1 angegebenen Merkmale gelöst. Am Boden des Vorratsbehälters ist eine aus einem Doppelrohr ausgebildete Entnahmeleitung für das Flüssiggas mit verschließbaren Entnahmehähnen angeschlossen, wobei der Innenraum des Doppelrohres zur Wärmeisolation der Entnahmeleitung evakuierbar ist. Dieser den Strömungsraum der Entnahmeleitung umgebende, evakuierte Ringraum des Doppelrohres schützt die Entnahmeleitung vor jeglicher Vereisung. Die Entnahmeleitung ist in den Vorratsbehälter derart eingeführt, daß ihre Mündung den Boden des Vorratsbehälters überragt und Ablagerungen im Vorratsbehälter nicht in die Entnahmeleitung gelangen können. In gleicher Weise sind die Entnahmehähne an der Entnahmeleitung angeordnet, auch ihre Mündungen ragen in den Strömungsraum der Entnahmeleitung hinein, so daß ggf. am Boden der Entnahmeleitung sich sammelnde Ablagerungen beim Abfüllen des Flüssiggases nicht mitgerissen werden.

Um unerwünschte Dampf- oder Luftpolster im Strömungsraum der Entnahmeleitung zu vermeiden, ist die Entnahmeleitung in weiterer Ausbildung der Erfindung mittig am Vorratsbehälter angeschlossen und von ihrer Anschlußstelle ausgehend nach unten geneigt ausgeführt, Patentanspruch 2. Hierdurch wird erreicht, daß in der Entnahmeleitung gebildete Dampf- oder Luftblasen zur Anschlußstelle hin aufsteigen und in den Vorratsbehälter abgeführt werden.

Eine wesentliche Weiterbildung der Erfindung besteht nach Patentanspruch 3 darin, daß auch die Entnahmehähne einschließlich ihres Anschlußbereiches zum Anschluß von mit Flüssiggas füllbaren Flüssiggaskannen von evakuierbaren Hohlräumen umgeben sind. Auf diese Weise wird eine optimale Wärmeisolation des gesamten Abfüllsystems erreicht.

Die Erfindung und weitere Ausbildungen der Erfindung werden nachfolgend anhand eines Ausführungsbeispieles näher erläutert. In der Zeichnung ist schematisch ein System zum Abfüllen von Flüssiggas aus einem Vorratsbehälter mit Entnahmeleitung dargestellt. Die Zeichnung zeigt im einzelnen:

Figur 1    Längsschnitt eines Abfüllsystems mit Vorratsbehälter und Entnahmeleitung gemäß Schnittlinie I/I nach Figur 2;

Figur 2    Seitenansicht eines Vorratsbehälters nach Figur 1 aus Sichtrichtung II/II.

Figur 3    Anschlußbereich eines Entnahmehahns mit Anschlußteil für eine Flüssiggaskanne.

Figur 1 und 2 zeigen ein System mit einem Vorratsbehälter 1 zur Entnahme von flüssigem Stickstoff. Am grundsätzlichen Aufbau des Systems ändert sich nichts, wenn statt Stickstoff ein anderes verflüssigtes Gas im Vorratsbehälter gespeichert und daraus entnommen wird. Das System ist dann lediglich entsprechend den für das gespeicherte Flüssiggas geltenden Werten für Druck und Temperatur auszulegen.

Der Vorratsbehälter 1 weist eine doppelwandige Außenwand 2 auf, deren Hohlraum 3 evakuierbar ist. Hierzu ist am Behälter ein Vakuum- und Sicherheitsventil 4 zum Anschluß einer Vakuumleitung 5 angebracht. Beim Öffnen des Ventils 4 werden im Hohlraum 3 ggf. enthaltene Gase entfernt. Zum Einfüllen von Stickstoff in den Vorratsbehälter 1 ist ein Einfüllstutzen 6 mit einem Anschluß für eine Fülleitung 7, mit einem Sicherheitsventil 8, einem Druckanzeiger 9 und einer Abgasleitung 10 zum Abführen von sich im oberen Bereich des Vorratsbehälters 1 bildenden Dampf- oder Luftpolstern vorgesehen. Im Einfüllstutzen 6 ist auch ein Filter 11, im Ausführungsbeispiel ein Zeolith-Filter eingesetzt, der beim Auffüllen des Vorratsbehälters mit Flüssiggas das Einspülen von Verunreinigungen unterbindet. Eine Füllstandsanzeige 12 am Vorratsbehälter zeigt den jeweils gegebenen Behälterfüllgrad an.

Am Boden 12 des Vorratsbehälters 1 ist eine Entnahmeleitung 13 für den flüssigen Stickstoff angeschlossen, die achsparallel zum Vorratsbehälter 1 verlegt ist. Die Entnahmeleitung 13 besteht analog zum Vorratsbehälter 1 aus einem Doppelrohr, dessen Innenraum 14 - zur Wärmeisolation der Entnahmeleitung - über einen Vakuumanschluß 15 evakuierbar ist. Die Entnahmeleitung 13 ist am Boden 12 des Vorratsbehälters 1 derart angeschlossen, daß sie mit ihrer Mündung 16 den Bodenbereich des Vorratsbehälters 1 überragt, auf dem sich Verunreinigungen, insbesondere Wassereis absetzen. Die Mündung 16 hebt sich vom Boden 12 des Vorratsbehälters soweit ab, daß bei einer Entnahme von flüssigem Stickstoff nur geringfügig Verunreinigungen in die Entnahmeleitung gelangen.

In gleicher Weise, wie die Mündung 16 der Entnahmeleitung 13 in den Vorratsbehälter 1 eingeführt ist, sind auch an der Entnahmeleitung angebrachte Entnahmehähne 17 mit der Entnahmeleitung verbunden. Auch ihre in den Entnahmeleitung 13 bis zum Strömungsraum 18 für den flüssigen Stickstoff eingeführten Leitungsenden 19 überragen den Boden des Strömungsraumes 18 soweit, daß sich ggf. in der Entnahmeleitung 13 absetzende Verunreinigungen beim Öffnen der Entnahmehähne 17 und Entnahme flüssigen Stickstoffs nur vernachlässigbar gering mitgerissen werden.

Im Ausführungsbeispiel sind an der Entnahmeleitung 13 insgesamt acht Entnahmehähne 17 angebracht. Die Entnahmeleitung 13 ist über ein Verbindungsstück 20 mittig am Boden 12 des Vorratsbehälters 1 angeschlossen. Stützen 21 am Vorratsbehälter 1 sorgen für die für den Anschluß erforderliche Bodenfreiheit des Behälters. Die Entnahmeleitung 13 fällt - ausgehend von ihrer mittigen Anschlußstelle am Vorratsbehälter 1, bzw. im Ausführungsbeispiel ausgehend vom Anschluß der Entnahmeleitung 13 am Verbindungsstück 20 - in zwei Schenkeln 13', 13" mit geringer Neigung bis zu beiden Schenkelenden 23', 23" hin ab. Die Neigung der Schenkel 13', 13" ist derart bemessen, daß im Strömungsraum 18 der Entnahmeleitung 1 gebildete Dampf- oder Luftblasen zum Verbindungsstück 20 hin und aus der Entnahmeleitung hinaus in den Vorratsbehälter 1 aufsteigen können.

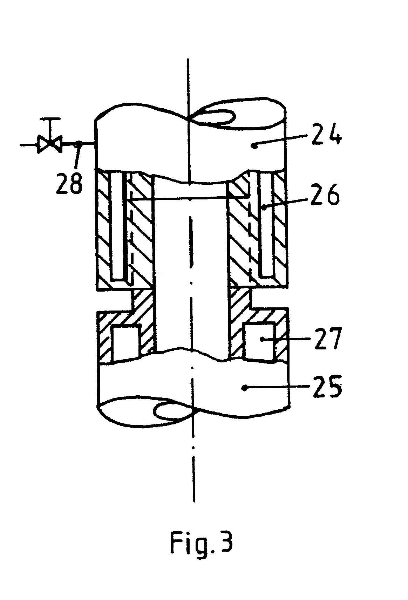

Im Ausführungsbeispiel sind in gleicher Weise wie die Entnahmeleitung 13 auch die Entnahmehähne 17 von einem zur Wärmeisolierung dienenden evakuierbaren Hohlraum umgeben. Figur 3 zeigt einen Teil der Entnahmehähne 17, nämlich ihren Anschlußbereich 24 zum Anschluß von Flüssiggaskannen, von denen in Figur 3 ebenfalls nur ein Anschlußstutzen 25 wiedergegeben ist. Im Ausführungsbeispiel sind sowohl der Anschlußbereich 24 als auch der Anschlußstutzen 25 doppelwandig ausgeführt und beide dadurch gegebenen Hohlräume 26, 27 in den Wandungen evakuierbar. Am Anschlußbereich 24 ist ein Vakuumanschluß 28 mit zu öffnendem Ventil zur Evakuierung schematisch dargestellt. Wärmeverluste werden so auch beim Abfüllen des Stickstoffs in die Flüssiggaskannen weitgehend vermieden.

Die Entnahmeleitung 13 besteht im Ausführungsbeispiel aus einzelnen miteinander verbindbaren Teilstücken, die in der Zeichnung schematisch angegeben sind. Die Verbindung ist derart gestaltet, daß beim Anschluß aller Teilstücke zur Ausbildung der Entnahmeleitung 13 ein geschlossen evakuierbarer Innenraum 14 zwischen den Doppelrohrteilen entsteht.

Mit dem beschriebenen System zum Abfüllen flüssiger Gase sind in optimaler Weise Wärmeverluste und Verluste von Flüssiggas zu vermeiden. Es ist eine ständige Betriebsbereitschaft gegeben, Vereisungen oder Dampf- oder Luftpolster, die betriebsstörend wirken, werden weitgehend verhindert.

## Patentansprüche

1. System zum Abfüllen verflüssigter Gase, insbesondere zum Abfüllen flüssigen Stickstoffs aus einem Vorratsbehälter für das Flüssiggas, **dadurch gekennzeichnet,** daß am Boden (12) des Vorratsbehälters (1) eine Entnahmeleitung (13) mit mehreren am Boden der Entnahmeleitung (13) angeschlossenen, verschließbaren Entnahmehähnen (17) vorgesehen ist, daß die Entnahmeleitung (13) aus einem Doppelrohr besteht, dessen Wandinnenraum (14) evakuierbar ist, daß die Entnahmeleitung (13) in den Vorratsbehälter (1) und die Entnahmehähne (17) in die Entnahmeleitung (13) derart münden, daß sie den Boden (12) des Vorratsbehälters (1) bzw. den Boden der Entnahmeleitung (13) überragen.

2. System nach Anspruch 1, **dadurch gekennzeichnet,** daß die Entnahmeleitung (13) am Vorratsbehälter (1) mittig angeschlossen ist und von ihrer Anschlußstelle (22) ausgehend nach unten geneigt angeordnet ist.

3. System nach Anspruch 1 oder 2, **dadurch gekennzeichnet,** daß die Entnahmehähne (17) einschließlich ihres Anschlußbereiches zum Anschluß von mit Flüssiggas füllbaren Flüssiggaskannen von evakuierbaren Hohlräumen (26, 27) umgeben sind.

4. System nach einem der vorhergehenden Ansprüche, **dadurch gekennzeichnet,** daß am Einfüllstutzen (6) des Vorratsbehälters (1) ein Filter (11) zur Zurückhaltung von Verunreinigungen im in den Vorratsbehälter (1) einzufüllenden Flüssiggas vorgesehen ist.

Fig.1

Fig.2

Fig.3

**Europäisches
Patentamt**

**EUROPÄISCHER
RECHERCHENBERICHT**

Nummer der Anmeldung

**EP 91 10 4514**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 722 207  (MASCHINENFABRIK AUGSBURG-NÜRNBERG) <br> * Seite 4, Zeilen 1-10; Seite 6, Absatz 3 - Seite 7, Ende der Seite; Seite 9, Zeile 1 - Seite 10, Zeile 15; Figur 1 * | 1 | F 17 C 9/00 <br> F 16 L 59/06 |
| A | | 3 | |
| | --- | | |
| Y | GB-A-2 169 998  (METAL BOX) <br> * Auszug; Figuren 1,2; Seite 2, Zeilen 14-25,46-56,63-68 * | 1 | |
| | --- | | |
| X | EP-A-0 252 312  (MESSER GRIESHEIM) <br> * Auszug; Seite 3, Zeilen 51-54; Figur 2 * | 1,4 | |
| | --- | | |
| A | US-A-3 366 280  (J. SAMPSON et al.) <br> * Auszug; Figuren 1-3 * | 2 | |
| | ----- | | |

RECHERCHIERTE SACHGEBIETE (Int. Cl.5)

B 65 D
B 67 D
F 16 L
F 17 C

Der vorliegende Recherchenbericht wurde für alle Patentansprüche erstellt

| Recherchenort | Abschlußdatum der Recherche | Prüfer |
|---|---|---|
| Den Haag | 09 Juli 91 | SIEM T.D. |